# EUROPEAN PATENT SPECIFICATION

(11) **EP 0 847 840 B1**
(45) Date of publication and mention of the grant of the patent: **19.11.2003**
(21) Application number: 97830642.1
(22) Date of filing: 04.12.1997
(51) Int. Cl.: B27B 17/12

(54) **System for the lubrification of the cutter of pneumatic-operated chain saw**
Schmierungssystem für die Sägekette einer pneumatisch-angetriebenen Kettensäge
Système de lubrification d'une chaîne de sciage d'une scie à chaîne à moteur pneumatique

(30) Priority: 12.12.1996 IT BO960647
(43) Date of publication of application: 17.06.1998
(73) Proprietor: Campagnola S.R.L., 40069 Zola Predosa (IT)
(72) Inventor: Vittorio, Ferretti Pio, 40050 - Ponte Rivabella (Bologna) (IT)
(74) Representative: Negrini, Elena

(56) References cited:
- AU-B- 557 554
- US-A- 2 351 739
- US-A- 2 809 718
- US-A- 4 802 555
- US-A- 4 884 340
- DATABASE WPI Section PQ, Week 198709 Derwent Publications Ltd., London, GB; Class P63, AN 1987-063280 XP002183409 & SU 1 242 357 A (ORE MINE EQUIP RES), 7 July 1986 (1986-07-07)

## Description

The present invention relates to a saw operated by a pneumatic engine.

Saws of this kind usually include a casing, which contains the engine activating the cutting element.

An arm extends from the front part of the casing and a cutting element is set to turn around the arm. The cutting element is typically formed by a closed-loop chain, whose links have gauge teeth.

Two handles for picking up and work control of the chain saw, are made integral to the rear part and to one side of the casing.

One of the problems in the chain saw design derives from the necessity for lubrication of the cutting chain, which, during the saw operation, runs following the fore arm profile and introducing its suitable appendices in a peripheral groove made in this arm.

Once, lubrication operation were made by periodically interrupting the cutting operation and manually applying the lubricant fluid to the chain.

It is obvious that this system is not convenient, because it is necessary to interrupt longer cutting operations to add new lubricant fluid, that gets rapidly used up.

According to one solution of the problem, a lubricant reservoir is situated inside the side handle and equipped with channels directed toward the chain.

The lubricant is let out in a controlled way from the reservoir by overpressure formed thereinside by means of a sized pipe connected with the pneumatic engine discharge.

In this case, the disadvantages derive from big dimensions of the handle, which could be offset only by providing a reservoir of insufficient capacity, and from the possibility of removing the handle only when the reservoir is empty, or only with particular precautions, so as to avoid the risk of undesired reversal of lubricant fluid.

The Patent Application BO92U 000079 filed on 17.04.1992 discloses a chain saw in which the problem is solved by applying a technical solution used for internal combustion engine operated saw. There, the space inside the casing is big enough to house also a lubricant reservoir.

A further example of a prior art device utilising an internal combustion engine for chain saw lubrication is known from US-A-4,882,555.

The pneumatic chain saws are usually used for works requiring extremely reduced dimensions and weight, together with high handiness, which results in very limited internal space inside the casing.

The technical solution disclosed in the Patent Application No. BO92U 000079 makes it possible to mount a reservoir inside the frame also in these cases. The reservoir must be shaped following the casing external shape and is housed thereinside where it is fixed by removable fastening, e.g. with suitable screws.

The lubricant fluid is taken from the reservoir and applied by a pump fastened to the reservoir side.

The pump outlet side is directed toward the external edge of the blade carrying arm, so that the lubricant taken from the reservoir is directed toward the arm.

The pump is operated by an arm, which extends up to the point corresponding to the lateral handle and which is provided, in this area, with a push-button.

The user can act on the push-button without interrupting the cutting operation.

The object of the present invention is to provide a lubrication system for pneumatic-operated chain saws, as described previously, which applies lubricant in a completely automatic way, without distracting the user and without interrupting the cutting operation.

Another object of the invention is to provide a solution, which is cheap, simple to construct and which does not condition functionally or dimensionally any part of the saw, except the casing.

The suggested system is compact and practical and does not require any periodical activation intervention by the user.

Obviously, it will be necessary to fill up the lubricant reservoir, but this operation can be performed in any moment without disassembling of any part of the chain saw.

The simplicity of the system influences positively also its assembly speed, its cheapness and especially its operation reliability, since it does not include any active mechanical elements, like pumps or similar, which are expensive, fault-prone and require maintenance operations.

The characteristics of the invention will become apparent from the following description with specific reference to the enclosed drawings, in which:
- Fig. 1 is a lateral schematic view of a pneumatic-operated chain saw in its basic form;
- Fig. 2 is an enlarged sectional view of a particular of the chain saw of Fig. 1.

With reference to the above described figures, the lubrication system for the cutting element, being the subject of the present invention, is designed for a pneumatic-operated chain saw formed by a casing, that supports a pneumatic engine and contains mechanical driving means. A blade carrying arm 2 and two handles 9,10 are fastened to the casing. A reservoir 11 is provided for the lubricant liquid.

In particular, the blade carrying arm 2 is removably fastened to a fore wing 1a of the casing 1, so as to support and guide the cutting element 3,4, formed by a close-loop chain 3, whose links 4 are equipped with appendices turned toward inside of the chain loop. These appendices are introduced into a peripheral groove made along the external edge of the blade carrying arm 2.

A terminal part of the loop formed by the chain 3 is trained around a pinion keyed on the outlet shaft of the pneumatic engine 8, so that the chain 3 is driven into rotation when the engine is operated.

According to known techniques, the blade carrying arm 2 is fastened by screws, that are not shown, which pass through a slot 5, made in the wing 1a, and engage with a longitudinal notch 6 made in the region of an end of the arm 2.

The slot 5 allows longitudinal movements of the arm 2 in order to adjust the chain 3 tension and to allow its substitution, while the arm oscillation is prevented by a peg 7, extending from the wing 1a and inserted in the notch 6.

According to the invention, the reservoir 11 is connected with the casing 1 in such a way that a part 11a of its external surface rests against the frame 18 of the pneumatic engine 8.

According to a first embodiment, the reservoir 11 is manufactured as one body with the casing 1 and is situated above the frame 18.

According to another embodiment, the reservoir 11 is removably fastened to the casing by locking elements, e.g. screws, not shown in the drawings.

In both cases, the reservoir 11 has a through hole 21 made in its part 11a resting against the frame 18. The frame 18 features a corresponding hole 28 crossing the area 18a, against which the reservoir 11 rests.

Thus the two holes coincide.

The compressed air used for operation of the pneumatic engine is normally discharged through suitable openings made in the frame 18.

The hole 28 made in the area 18a of the frame, opens in the air discharge collector, which leads to the above mentioned openings.

As a result, a part of the discharged air goes out through the hole 28, which can be, although not necessarily, sized, and returns inside the reservoir 11, creating there a light overpressure.

There are provided check means 12 which allow only discharge air to pass from the frame 18 to the reservoir 11, thus preventing the lubricant liquid from flowing in the opposite direction.

Finally, a duct 13 extends from the reservoir 11 up to a point, where the chain 3 passes, so that, due to the pressure of the air entering the reservoir 11, the lubricator is pushed along the duct 13 until it is spread on the cutting element 3, 4.

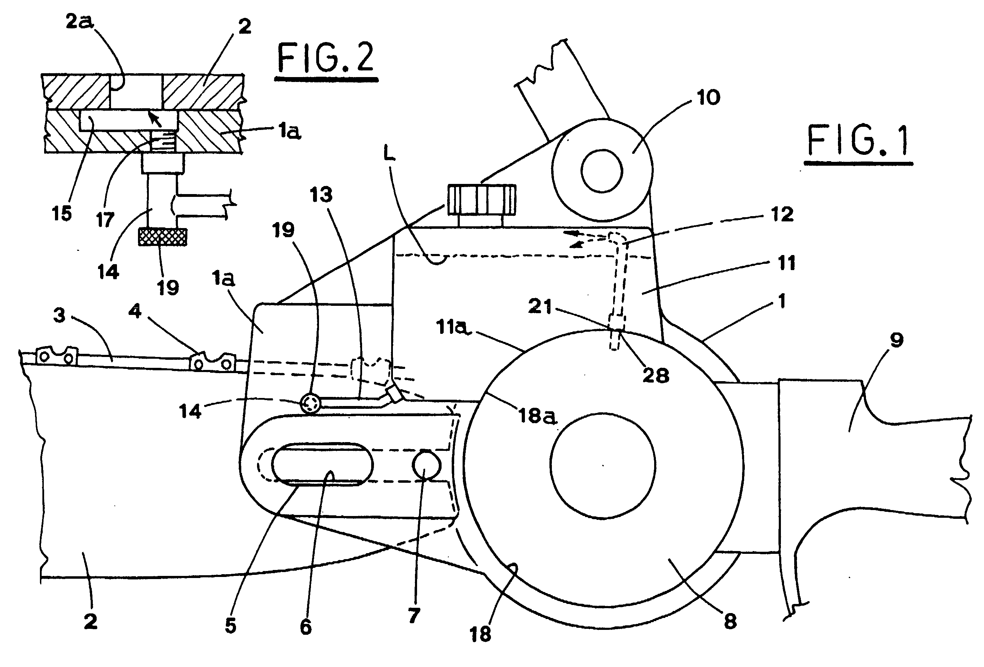

According to a further embodiment of the invention, with reference to the fig. 2, the duct 13 engages, by screwing, with a through hole 17 of the wing 1a of the casing 1, so as to be connected with a hole 2a of the arm 2 communicating with the already mentioned peripheral grove guiding the chain 3.

The duct 13 can be connected to the wing 1a by means of a screw connector 14, of known type, that has a screw 19 set in its external part for regulating the flow that passes through the connector.

Therefore, it is possible to adjust the flow of the lubricant liquid to the chain 3 by acting on the regulation screw 19.

An oblong recess 15 is provided on the surface of the wing 1a against which the arm 2 strikes, in the region of the through hole 17, in order to allow the connection between this hole 17 and the hole 2a of the blade carrying arm 2, independently from their reciprocal position within the interval of the chain 3 tension adjustment.

Therefore, the lubricant flows through the duct 13 into the cavity 15 and reaches the hole 2a, even if this hole is displaced with respect to the hole 17.

For improving the system operation, the check means 12 for the passage of only discharge air from the frame 18 to the reservoir 11, include a pipe 12 screwed into the holes 28,21 and opening in an air zone inside the reservoir 11.

Otherwise, or additionally, a one-way valve can be provided, which is not shown in the drawings.

## Claims

1. System for lubrication of the cutting element (3,4) of a pneumatic-operated chain saw of the type including:
- a casing (1);
- a pneumatic engine (8) fastened to the casing (1) for operating said cutting element (3,4);
- driving means, housed in said casing (1) and connected to said engine (8) for driving said cutting element;
- a blade carrying arm (2) removably fastened to a wing (1a) of said casing (1) for supporting and guiding said cutting element (3,4), and
- a reservoir (11) adapted to contain lubricant liquid;
said system **characterised in that** said reservoir (11) is connected with said casing (1) in such a way that a part (11a) of its external surface rests against the frame (18) of said pneumatic engine (8), **in that** the reservoir (11) features a first through-hole (21) made in its part (11a) resting against the frame (18), **in that** said frame (18) features a second through-hole (28) in the area (18a), where said reservoir (11) rests, so that said reservoir first through-hole (21) and said frame second through-hole (28) coincide with each other, **in that** there are provided check means (12) which allow only the discharge air to pass from the frame (18) to the reservoir (11) and prevent in use, the lubricant liquid from flowing in the opposite direction, and **in that** a duct (13) extends from the reservoir (11) up to a point, where said cutting element (3,4) passes, so that, due to the pressure of the air moving from the engine frame (18) inside the reservoir (11), the lubricant liquid is pushed along said duct (13) until it is spread on said cutting element (3,4).

2. System, according to claim 1, **characterised in that** said duct (13) originates from the reservoir (11) and is connected, in screw engagement, with a through hole (17) made in said wing (1a) of said casing (1), against which said blade carrying arm (2) strikes, so that said duct (13) is connected with a hole (2a) of the arm (2) communicating with a peripheral grove guiding said cutting element (3,4).

3. System, according to claim 2, **characterised in that** the duct (13) is connected to the wing (1a) by means of a screw connector (14), that has a screw (19) set in its external part for adjusting the flow that passes through the connector.

4. System, according to claim 2, **characterised in that** an oblong recess (15) is made in the surface of the wing (1a) of said casing (1) against which the blade carrying arm (2) abuts, in the region of said through hole (17), in order to allow the connection between this hole (17) and the hole (2a) of the blade carrying arm (2), independently from their reciprocal position, within the interval of the cutting element (3,4) tension adjustment.

5. System, according to claim 1, **characterised in that** said check means (12) for the passage of only discharge air from the frame (18) to the reservoir (11), include a pipe (12) screwed into said holes (28,21) made in said reservoir (11) and in said frame (18) and opening in an air zone inside the reservoir (11).

6. System, according to claim 1, **characterised in that** said check means (12) for the passage of only discharge air from the frame (18) to the reservoir (11), include a one-way valve.

7. System, according to claim 1, **characterised in that** said reservoir (11) is integral with said casing (1) and is situated over the frame of said pneumatic engine (8).

8. System, according to claim 1, **characterised in that** said reservoir (11) is removably connected with said casing (1) by locking means and is situated over the frame of said pneumatic engine (8).

9. System, according to claim 1, **characterised in that** said cutting element (3,4) is formed by close-loop chain (3), whose links (4) are equipped with gauge teeth.

## Patentansprüche

1. System zum Schmieren des Schneidelementes (3, 4) einer pneumatisch betätigten Kettensäge eines Typs, der
ein Gehäuse (1),
einen am Gehäuse (1) befestigten Pneumatikmotor (8) zum Betätigen des Schneidelementes (3, 4),
eine Antriebseinrichtung, die im Gehäuse (1) angeordnet und mit dem Motor (8) zum Antreiben des Schneidelementes verbunden ist,
einen Blatträgerarm (2), der lösbar an einem Flügel (1a) des Gehäuses (1) zum Lagern und Führen des Schneidelementes (3, 4) befestigt ist, und
einen Speicher (11), der eine Schmiermittelflüssigkeit enthalten kann,
umfaßt, wobei das System **dadurch gekennzeichnet ist, daß** der Speicher (11) derart mit dem Gehäuse (1) verbunden ist, daß ein Teil (11a) seiner Außenfläche gegen den Rahmen des Pneumatikmotors (8) gelagert ist, der Speicher (11) ein erstes Durchgangsloch (21) aufweist, das in seinem Teil (11a), der gegen den Rahmen (18) gelagert ist, ausgebildet ist, der Rahmen (18) ein zweites Durchgangsloch (28) in dem Bereich (18a) aufweist, in dem der Speicher (11) gelagert ist, so daß das erste Durchgangsloch (21) des Speichers und das zweite Durchgangsloch (28) des Rahmens miteinander zusammenfallen, eine Sperreinrichtung (12) vorgesehen ist, die nur zuläßt, daß die Auslaßluft vom Rahmen (18) zum Speicher (11) dringt, und verhindert, daß die Schmiermittelflüssigkeit in der entgegengesetzten Richtung strömt, und sich ein Kanal (13) vom Speicher (11) bis zu einem Punkt erstreckt, den das Schneidelement (3, 4) passiert, so daß durch den Druck der sich vom Motorrahmen (18) innerhalb des Speichers (11) bewegenden Luft die Schmiermittelflüssigkeit entlang dem Kanal (13) gedrückt wird, bis sie auf das Schneidelement (3, 4) verteilt wird.

2. System nach Anspruch 1, **dadurch gekennzeichnet, daß** der Kanal (13) vom Speicher (11) ausgeht und in Schraubeingriff mit einem Durchgangsloch (17) verbunden ist, das im Flügel (1a) des Gehäuses (1) ausgebildet ist, gegen das der Blatträgerarm (2) trifft, so daß der Kanal (13) mit einem Loch (2a) des Armes (2) verbunden ist, das mit einer Umfangsnut in Verbindung steht, welche das Schneidelement (3, 4) führt.

3. System nach Anspruch 2, **dadurch gekennzeichnet, daß** der Kanal (13) mit dem Flügel (1a) mit einem Schraubverbinder (14) verbunden ist, der eine Schraube (19) aufweist, welche in seinem äußeren Teil zum Einstellen des den Verbinder passierenden Stromes angeordnet ist.

4. System nach Anspruch 2, **dadurch gekennzeichnet, daß** eine rechteckige Ausnehmung (15) in der Oberfläche des Flügels (1a) des Gehäuses (1), gegen das der Blatträgerarm (2) stößt, im Bereich des Durchgangsloches (17) ausgebildet ist, um eine Verbindung zwischen diesem Loch (17) und dem Loch (2a) des Blatträgerarmes (2) unabhängig von deren wechselseitiger Position innerhalb des Intervalles der Spannungseinstellung des Schneidelementes (3, 4) zu ermöglichen.

5. System nach Anspruch 1, **dadurch gekennzeichnet, daß** die Sperreinrichtung (12) für den alleinigen Durchtritt der Auslaßluft vom Rahmen (18) zum Speicher (11) ein Rohr (12) umfaßt, das in die Löcher (28, 21), die im Speicher (11) und im Rahmen (18) ausgebildet sind, geschraubt ist und in eine Luftzone innerhalb des Speichers (11) mündet.

6. System nach Anspruch 1, **dadurch gekennzeichnet, daß** die Sperreinrichtung (12) für den alleinigen Durchtritt der Auslaßluft vom Rahmen (18) zum Speicher (11) ein Einwegventil umfaßt.

7. System nach Anspruch 1, **dadurch gekennzeichnet, daß** der Speicher (11) einstückig mit dem Gehäuse (1) ausgebildet und über dem Rahmen des Pneumatikmotors (8) angeordnet ist.

8. System nach Anspruch 1, **dadurch gekennzeichnet, daß** der Speicher (11) über eine Verriegelungseinrichtung lösbar mit dem Gehäuse (1) verbunden und über dem Rahmen des Pneumatikmotors (8) angeordnet ist.

9. System nach Anspruch 1, **dadurch gekennzeichnet, daß** das Schneidelement (3, 4) von einer eine geschlossene Schleife bildenden Kette (3) gebildet ist, deren Kettenglieder (4) mit Meßzähnen versehen sind.

## Revendications

1. Système de lubrification de l'élément de coupe (3, 4) d'une scie à chaîne à commande pneumatique du type comprenant :
• un boîtier (1) ;
• un moteur à air comprimé (8) fixé au boîtier (1) pour faire fonctionner ledit élément de coupe (3, 4) ;
• des moyens d'entraînement, logés dans ledit boîtier (1) et raccordés audit moteur (8) pour entraîner ledit élément de coupe ;
• un bras support de lame (2) fixé de manière amovible à une aile (la) dudit boîtier (1) pour supporter et guider ledit élément de coupe (3, 4) et
• un réservoir (11) adapté pour contenir un liquide lubrifiant ;
ledit système étant **caractérisé en ce que** ledit réservoir (11) est relié audit boîtier (1) de telle sorte qu'une partie (11a) de sa surface externe est en appui contre le châssis (18) dudit moteur à air comprimé (8), **en ce que** le réservoir (11 ) présente un premier trou débouchant (21) réalisé dans sa partie (11a) en appui contre le châssis (18), **en ce que** ledit châssis (18) présente un deuxième trou débouchant (28) dans la zone (18a) où ledit réservoir (11) est en appui, de sorte que ledit premier trou débouchant (21 ) du réservoir et ledit second trou débouchant (28) dudit châssis coïncident entre eux, **en ce que** des moyens de contrôle (12) sont prévus, lesquels permettent le passage uniquement de l'air de refoulement du châssis (18) vers le réservoir (11) et empêchent le liquide lubrifiant de s'écouler dans la direction opposée, et **en ce qu'**un conduit (13) s'étend depuis le réservoir (11) jusqu'à un point où passe ledit élément de coupe (3, 4) de sorte que, par la pression de l'air se déplaçant dans le réservoir (11) à partir du châssis du moteur (18), le liquide lubrifiant est poussé le long dudit conduit (13) jusqu'à ce qu'il soit appliqué sur ledit élément de coupe (3, 4).

2. Système selon la revendication 1, **caractérisé en ce que** ledit conduit (13) prend son origine dans le réservoir (11) et est raccordé, par vissage, à un trou débouchant (17) réalisé dans ladite aile (1a) dudit boîtier (1), contre lequel ledit bras support de lame (2) vient en contact, de sorte que ledit conduit (13) est raccordé à un trou (2a) du bras (2) communiquant avec une cannelure périphérique guidant ledit élément de coupe (3, 4).

3. Système selon la revendication 2, **caractérisé en ce que** le conduit (13) est. raccordé à l'aile (1a) au moyen d'un connecteur à vis (14) qui a une vis (19) fixée dans sa partie externe pour régler le débit qui passe par le connecteur.

4. Système selon la revendication 2, **caractérisé en ce qu'**un évidement oblong (15) est réalisé à la surface de l'aile (1a) dudit boîtier (1) contre lequel vient en appui le bras support de lame (2) au niveau dudit trou débouchant (17), afin de permettre la connexion de ce trou (17) avec le trou (2a) du bras support de lame (2), indépendamment de leur position réciproque, dans l'intervalle de réglage de tension de l'élément de coupe (3, 4).

5. Système selon la revendication 1, **caractérisé en ce que** ledit moyen de contrôle (12) pour le passage uniquement de l'air de refoulement depuis le châssis (18) jusqu'au réservoir (11) inclut un tuyau (12) vissé dans lesdits trous (28, 21) réalisés dans ledit réservoir (11) et dans ledit cadre (18) et s'ouvrant dans une zone d'air à l'intérieur du réservoir (11).

6. Système selon la revendication 1, **caractérisé en ce que** ledit moyen de contrôle (12) pour le passage uniquement de l'air de refoulement depuis le châssis (18) jusqu'au réservoir (11) inclut une soupape de retenue.

7. Système selon la revendication 1, **caractérisé en ce que** ledit réservoir (11) est intégré audit boîtier (1) et est situé au dessus du châssis dudit moteur à air comprimé (8).

8. Système selon la revendication 1, **caractérisé en ce que** ledit réservoir ( 11 ) est raccordé de manière amovible audit boîtier (1) par des moyens de verrouillage et est situé sur le châssis dudit moteur à air comprimé (8).

9. Système selon la revendication 1, **caractérisé en ce que** ledit élément de coupe (3, 4) est formé par une chaîne à boucle fermée (3) dont les maillons (4) sont munis de dents.
